# EUROPÄISCHE PATENTSCHRIFT

(11) **EP 1 887 241 B1**
(45) Veröffentlichungstag und Bekanntmachung des Hinweises auf die Patenterteilung: **14.09.2011**
(21) Anmeldenummer: 07014433.2
(22) Anmeldetag: 23.07.2007
(51) Int. Cl.: F16D 23/12, F16D 27/00, F16D 48/06

(54) **Verfahren und Vorrichtung zur Plausibilisierung einer definierten Position**
Method and device for verifying a defined position
Procédé et dispositif destinés au calcul de probabilité d'une position définie

(30) Priorität: 09.08.2006 DE 102006037142
(43) Veröffentlichungstag der Anmeldung: 13.02.2008
(73) Patentinhaber: Schaeffler Technologies GmbH & Co. KG, 91074 Herzogenaurach (DE)
(72) Erfinder: Baehr, Markus, Dr., 77855 Achern (DE); Dreher, Felix, 77815 Bühl (DE)

(56) Entgegenhaltungen:
- EP-A1- 1 650 458
- US-A1- 2005 211 524

## Beschreibung

Die Erfindung betrifft ein Verfahren mit den Merkmalen gemäß dem Oberbegriff von Anspruch 1 sowie eine Vorrichtung mit den Merkmalen gemäß dem Oberbegriff des Anspruchs 5.

Das Dokument EP 1 650 458 A1 offenbart eine Ausrückvorrichtung zur Betätigung einer Kupplung. Die Ausrückvorrichtung zur Betätigung einer Kupplung, insbesondere einer Kupplung im Antriebsstrang eines Kraftfahrzeuges zwischen Antriebsmotor und Schaltgetriebe, öffnet im Fehlerfall die Kupplung und ermöglicht in einem Parkmodus das Schließen der Kupplung bei stromlosem Aktor, indem diese einen Ausrückhebel umfasst, der sich mit einem Innenlager an einem Ausrücklager und mit einem Außenlager an einer Feder abstützt und sich zwischen Außen- und Innenlager an einem in axialer Richtung (bezogen auf die Kupplungsachse) festgelegten und in radialer Richtung verschiebbaren Lagerbock, der mittels einer motorisch angetriebenen Spindel radial um einen Verschiebeweg verschiebbar ist, an einem Drehpunkt abstützt, wobei der Ausrückhebel in einem Betriebsbereich so gekrümmt ist, dass dieser auf den Lagerbock eine in radialer Richtung wirkende Kraft ausübt, sodass der Lagerbock in eine Stellung gedrückt wird, in der die Kupplung geöffnet ist, und dass der Ausrückhebel einen Feststellbereich aufweist, der so gekrümmt ist, dass keine Kraft in radialer Richtung oder eine Kraft, die den Lagerbock in eine Stellung drückt, in der die Kupplung geschlossen ist, auf den Lagerbock ausübt.

Zur Steigerung des Komforts haben sich in den vergangenen Jahren immer mehr automatisierte Kupplungen in Fahrzeugen durchgesetzt. Der damit verbundene Einsatz von Sensorik und elektronisch integriertem Eingriff in den Fahrablauf erhöht zudem die Sicherheit des Fahrers. Zum Ansteuern dieser Kupplungen, die das Drehmoment vom Antriebsmotor auf ein automatisiertes Getriebe übertragen, werden Kupplungsaktoren eingesetzt. Diese Aktoren, die mit einem Elektromotor ausgestattet sind, stehen mit einer zentralen Steuereinheit in Verbindung, die im Fahrzeug integriert ist. Zur Steuerung des Elektromotors des Aktors dient ebenfalls eine elektronische Steuereinheit, die einen Microprozessor mit zugehörigen Speichereinrichtungen enthält. Dieser Steuereinheit werden die für den Betrieb der Kupplung relevanten Eingangsgrößen, die Stellung des Fahrpedals, der Fahrzeuggeschwindigkeit, die Gangposition eines Getriebes usw. zugeführt.

Zur Gewährleistung von sicheren Schaltvorgängen ist es unbedingt notwendig, die Stellung des Aktors zum Startzeitpunkt des Fahrzeuges bzw. bei einem Stromausfall zu bestimmen. In diesen Situationen befindet sich die Kupplung in einer geöffneten Stellung. Zur Betätigung der Kupplung dient ein Betätigungsglied. Dieses Betätigungsglied kann beispielsweise ein Kupplungshebel sein. Bei einer motorischen Betätigung einer Kupplung bestimmt die Stellung des Kupplungshebels deren Drehmomentübertragungsvermögen. Zur Steuerung bzw. Regelung des Anfahrens und von Schaltvorgängen ist eine Absolutstellung des Kupplungshebels unbedingt erforderlich. Diese Ermittlung der Absolutstellung des Kupplungshebels erfolgt über deren Referenzierung.

Zurzeit wird davon ausgegangen, dass sich beim Deaktivieren des Aktormotors zum Beispiel zum Referenzieren, beim Ausschalten des Fahrzeuges, oder im Fehlerfall, automatisch eine Gleichgewichtslage als Referenzposition der Spindel des Aktors auf dem Kupplungshebel einstellt. Eine weitere Möglichkeit der Referenzierung der Stellung der Spindel des Kupplungsaktors ist die Durchführung einer Plausibilisierung aufgrund einer speziellen Strukturierung der Wippkurve des Kupplungshebels. Dabei wird jedoch davon ausgegangen, den Lastverlauf bei speziellen Bewegungen des Aktors über die Aktormotorspannung auszuwerten.

Diese Auswertung von Aktorlastverläufen über der Aktorposition ist allerdings nur mit sehr großem Softwareaufwand zuverlässig möglich.

Daher liegt der Erfindung die Aufgabe zugrunde, sowohl ein Verfahren als auch eine Vorrichtung zu schaffen, womit auf kostengünstige und baulich einfache Weise eine Plausibilisierung einer Referenzposition eines Aktors bzw. eines Verlagerungselements durchgeführt werden kann.

Diese Aufgabe wird mit einem Verfahren zur Plausibilisierung einer definierten Position eines Verlagerungselements mit den Merkmalen des Anspruchs 1 gelöst.

Dazu werden eine erste Referenzposition und eine zweite Referenzposition definiert und in der Steuereinheit des Fahrzeuges hinterlegt. Das auf einer Spindel gelagerte und mit dieser in Wirkverbindung stehende Verlagerungselement ist mittels eines Spindelmotors verlagerbar, so auch in eine der beiden definierten Referenzpositionen oder einer Position zwischen diesen Referenzpositionen. Der Spindelmotor steht mit der Steuereinheit in Verbindung. Mittels der zweiten von der ersten beabstandeten Referenzposition erfolgt eine Plausibilisierung der tatsächlichen Position des Verlagerungselements in dem durch Verlagerung des Verlagerungselements überprüft wird, wie groß der Abstand dieser tatsächlichen Position zu einer der beiden Referenzpositionen ist.

Um sicher zu stellen, dass das Verlagerungselement die Position erreicht hat, die es erreichen sollte, wäre auch die Definition nur einer Referenzposition denkbar. Allerdings sind für eine sicherere Aussage zwei Referenzpositionen geeigneter.

In vorteilhafter Weise ist zu Beginn dieses Verfahrens der Spindelmotor deaktiviert, d. h. die Referenzierung findet vor Fahrtantritt bzw. nach einem Stromausfall statt. In diesem Zustand wird sichergestellt, dass kein Moment übertragen wird. Um dies zu gewährleisten ist darauf zu achten, dass der Abstand der am weitesten vom Kupplungsbetätigungspunkt entfernten Referenzposition größer ist als der Abstand zwischen den Referenzpunkten.

Allerdings wird der Spindelmotor nach Erreichen einer Gleichgewichtsposition des Verlagerungselements, die nicht einer der beiden Referenzposition entspricht, kurzzeitig bestromt. Diese kurzzeitige Bestromung kann auch in Form einer Zitterbestromung zur Überwindung der Reibung zwischen den betreffenden Bauteilen erfolgen. Nach dieser kurzzeitigen Bestromung wird der Spindelmotor wieder deaktiviert, um eine Momentenübertragung auszuschließen.

Diese Aufgabe wird weiterhin mit einer Vorrichtung zur Plausibilisierung einer definierten Position eines Verlagerungselements mit den Merkmalen des Anspruchs 5 gelöst.

Mittels eines Aktors, bestehend im Wesentlichen aus einem Spindelmotor, einer Spindel und einem auf dieser verschiebbar gelagerten Verlagerungselement, erfolgt eine Betätigung einer Kupplung. Die Vorrichtung zur Plausibilisierung der Position dieses axial verlagerbaren Verlagerungselements besteht dabei aus einem als Wippkurve ausgebildeten Hebel, an dem sich einerseits das Verlagerungselement abstützt und andererseits auch auf diesem abrollt. Dieser Hebel weist eine Vertiefung auf, zu der in einem definierten Abstand eine weitere Vertiefung vorgesehen ist.

In einer vorteilhaften Ausgestaltung der Erfindung definieren diese Vertiefungen an ihrer tiefsten Stelle jeweils einen Referenzpunkt.

Zur Vereinfachung der Demonstration des Verfahrensablaufs wird das Verlagerungselement mindestens durch eine Rolle verkörpert. Das Verlagerungselement könnte jedoch ebenso gut beispielsweise durch ein mit einer Druckrolle versehenes Federelement oder ähnlichem verkörpert werden.

Weiterhin ist es vorteilhaft zu beachten, dass der Abstand zwischen den beiden Referenzpunkten abhängig ist von der auf den Hebel wirkenden Gesamtkraft, dem Durchmesser der Rolle und dem der Gesamtkraft entgegenwirkenden erforderlichen Strom des Spindelmotors.

Zur Durchführung dieses Verfahrens ist es besonders vorteilhaft, dass die Spindel nicht selbsthemmend ausgebildet ist.

Weitere Vorteile und vorteilhafte Weiterbildungen der Erfindung sind Gegenstand der nachfolgenden Figuren sowie deren Beschreibungsteile.

Es zeigen:
- Figur 1: in schematischer Darstellung die wesentlichen Bauteile im Antriebstrang eines Fahrzeuges;
- Figur 2: eine schematische Darstellung einer Ausrückvorrichtung mit einem erfindungsgemäßen Hebel, der als Wippkurve ausgebildet ist;
- Figur 3: den Bereich des erfindungsgemäßen Hebels gemäß Figur 2 mit zwei Vertiefungen, sowie die auf das Verlagerungselement des Aktors wirkenden Kräfte;
- Figur 4: ein auf Figur 3 basierendes Diagramm, aus dem die Größe des vom Spindelmotor aufzubringenden Stromes während des Zurücklegens einer Wegstrecke des Verlagerungselements, um einen Referenzpunkt zu erreichen, hervorgeht,
- Figur 5: das Verfahren gemäß Figur 4 anhand eines Flussdiagramms.

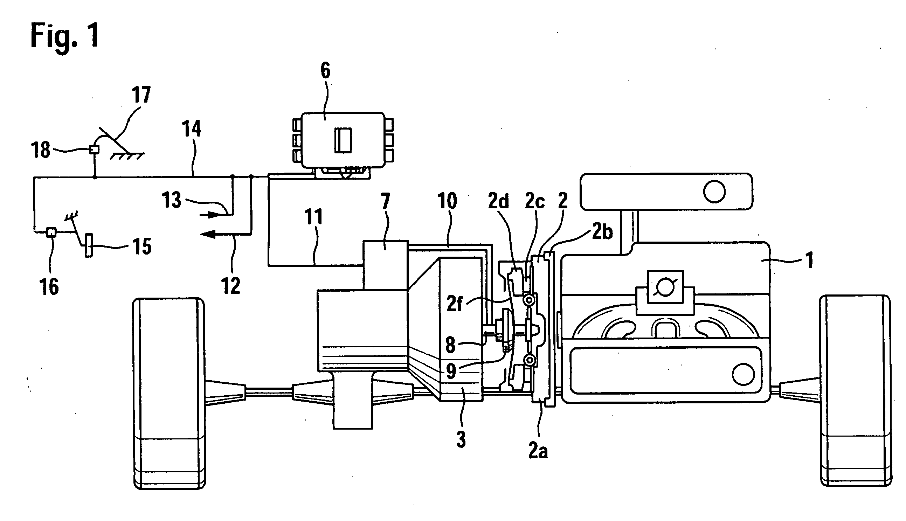

Die Figur 1 zeigt im Wesentlichen schematisch einen Antriebsstrang eines Fahrzeuges mit einer Antriebseinheit 1, einem Drehmomentübertragungssystem 2 und einem Getriebe 3. Das Drehmomentübertragungssystem 2 ist auf oder an einem Schwungrad 2a angeordnet oder befestigt, wobei dieses in der Regel einen Anlasserkranz 2b trägt. Das Drehmomentübertragungssystem 2 weist eine Druckplatte 2d, eine Tellerfeder 2f und eine Kupplungsscheibe 2c mit Reibbelägen auf. Ein Kraftspeicher, wie die Tellerfeder 2f, beaufschlagt die Druckplatte 2d in axialer Richtung auf die Kupplungsscheibe 2c hin, wobei ein Ausrücklager 9, das Bestandteil einer Ausrückvorrichtung ist, zur Betätigung des Drehmomentübertragungssystems 2 vorgesehen ist. Zwischen dieser Ausrückvorrichtung und den Tellerfederzungen der Tellerfeder 2f ist somit das Ausrücklager 9 angeordnet. Durch eine axiale Verlagerung dieses Ausrücklagers 9 wird die Tellerfeder 2f beaufschlagt und die als Drehmomentübertragungssystem 2 ausgebildete Kupplung rückt aus.

Die als Aktor 7 ausgebildete Ausrückvorrichtung ist als Spindelaktor ausgebildet, wobei sich dieser aus einem Spindelmotor 7a und einer Spindel 7b zusammensetzt, die mit einem als Wippkurve ausgebildeten Hebel 19, an dem das Ausrücklager 9 befestigt ist, in Wirkverbindung steht. Über die Verbindung 10 ist die Elektronik dieses Aktors 7 (hier der Inkrementalwegsensor des Spindelmotors) mit der Elektronik der Kupplung 2 verbunden. Die Steuereinheit 6 ist über eine Signalverbindung ebenfalls mit der Elektronik des Aktors 7 verbunden, wobei weitere Signalverbindungen 12 bis 14 mit der Steuereinheit 6 in Verbindung stehen. Die Signalverbindung 13 verarbeitet dabei eingehende Signale. Die Signalverbindung 12 verarbeitet dagegen Steuersignale von der Steuereinheit 6 und die Signalverbindung 14 stellt beispielsweise mittels eines Datenbusses eine Verbindung zu anderen Elektronikeinheiten her.

Zum Anfahren oder zum Starten des Fahrzeuges, im Wesentlichen aus dem Stand heraus oder aus einer langsamen Rollbewegung, bedient der Fahrer im Wesentlichen nur das Gaspedal, wie den Lasthebel 17, wobei die gesteuerte oder geregelte, automatisierte Kupplungsbetätigung mittels des Aktors 7 das übertragbare Drehmoment der Kupplung 2 bei einem Anfahrvorgang steuert. Aus der Figur 1 ist ebenfalls ein mit dem Gaspedal 17 in Verbindung stehender Sensor 18 erkennbar, sowie ein Bremsbetätigungselement 15 zur Betätigung der Betriebs- oder der Feststellbremse, wie Bremspedal, Handbremshebel oder hand- oder fußbetätigtes Betätigungselement der Feststellbremse. Zumindest ein Sensor 16 ist am Bremsenbetätigungselement 15 angeordnet und überwacht dessen Betätigung.

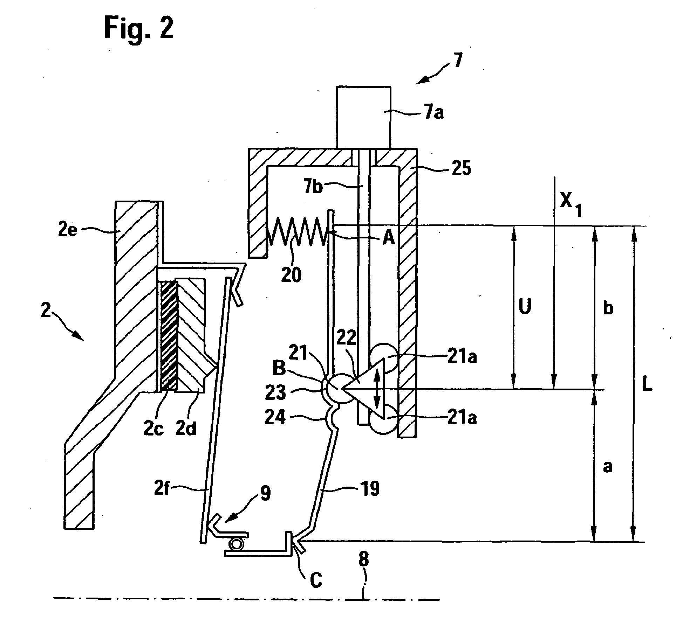

Die Figur 2 zeigt einen schematischen Aufbau einer Kupplung 2 mit einer erfindungsgemäßen Ausrückvorrichtung. Für gleiche Bauteile werden dabei gleiche Bezugszeichen verwendet.

Durch Aufdrücken der Druckplatte 2d auf die Gegendruckplatte 2e mittels der erfindungsgemäßen Ausrückvorrichtung wird die Kupplungsscheibe 2c zwischen beiden Platten eingeklemmt, so dass durch die auftretende (trockene) Reibung ein Drehmoment zwischen Gegendruckplatte 2e und Kupplungsscheibe 2c übertragen werden kann. An einer Andruckscheibe (nicht bezeichnet) stützt sich eine Tellerfeder 2f ab, die sich des weiteren an einem Druckring (durch eine Spitze an der Druckplatte 2d dargestellt) der Druckplatte 2d abstützt. Wird der radial innere Bereich der Tellerfeder 2f beispielsweise mit einem hier nicht dargestellten Ausrücklager 9 nach links gedrückt, wird die Druckplatte 2d gegen die Gegendruckplatte 2e gedrückt, so dass die Kupplung 2 geschlossen wird und ein Drehmoment zwischen Gegendruckplatte 2e und Kupplungsscheibe 2c übertragen werden kann. In dieser Figur 2 ist eine vollständig geschlossene Kupplung 2 dargestellt, in der das maximale Moment oder Nennmoment übertragen wird.

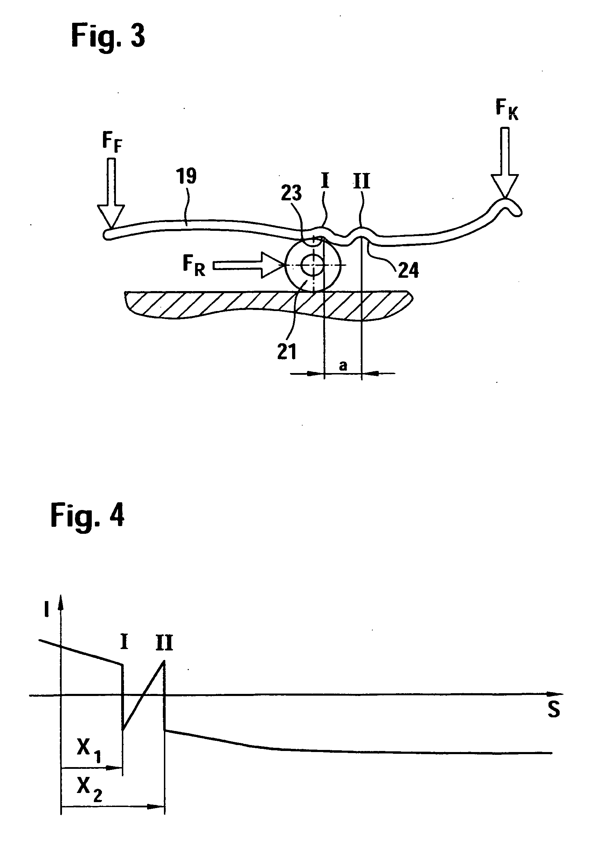

Die Betätigung des Ausrücklagers 9 erfolgt im Wesentlichen mit einem Hebel 19, der mit einer Feder 20 um einen Drehpunkt B betätigt wird. Dieser Hebel 19 stützt sich an einem Innenlager C an dem Ausrücklager 9 ab und an einer äußeren Lagerstelle A an der Feder 20. (Die in den Lagerstellen A und C auftretenden Kräfte sind der Figur 3 entnehmbar). Die nur schematisch angedeuteten Lagerstellen A und C legen den Hebel 19 sowohl in radialer als auch in Umfangsrichtung fest. Die Tellerfeder 2f übt somit auf das Ausrücklager 9 eine in dieser Darstellung nach rechts gerichtete Kraft (Kupplungskraft) F_{K} aus. Die Feder 20 übt auf die äußere Lagerstelle A ebenfalls eine nach rechts gerichtete Kraft (Federkraft) F_{F} aus. Um an dem Innenlager C eine nach links gerichtete Kraft auf das Ausrücklager 9 auszuüben, ist ein Gegenlager B zwischen dem Innenlager C und dem äußeren Lager A angeordnet, so dass der Hebel 19 nach Art einer Wippe betätigt werden kann. Das Gegenlager B ist radial verschiebbar angeordnet und wird von einem eine Rolle 21 aufweisenden Verlagerungselement 22 gebildet. Diese Rolle 21 stützt sich auf dem Hebel 19 ab. An dem Verlagerungselement 22 sind gegenüber der Rolle 21 zwei weitere Stützrollen 21 a angeordnet, die sich an einer am Kupplungs- bzw. Getriebegehäuse fest angeordneten Abstützung 25 abstützen. Das Verlagerungselement 22 umfasst eine Gewindebohrung, in die die Spindel 7b, die durch den Elektromotor 7a in Drehung versetzt werden kann, eingreift und so den Aktor 7 zur Betätigung der Kupplung 2 bildet. Durch Drehen der Spindel 7b wird das Verlagerungselement 22 in Richtung Ausrücklager 9 verschoben, wobei das Verlagerungselement 22 durch den elektromotorischen Antrieb verschiedene Positionen auf dem Hebel 19 angefahren werden können.

Der Gesamtabstand L zwischen innerer Lagerstelle C und äußerer Lagerstelle A wird durch die Stellung des Gegenlagers B aufgeteilt in einen der Feder 20 zugeordneten Hebelarm a und einem dem Ausrücklager 9 zugeordneten Hebelarm b. Das Verhältnis, der auf das Ausrücklager 9 ausgeübten Kraft F_{K} zur Kraft F_{F} der Feder 20 entspricht dem Verhältnis der beiden Hebelarme a gegenüber b nach dem bekannten Hebelgesetz. Je weiter das Gegenlager B vom äußeren Lager A wegrückt, desto geringer wird die auf das Ausrücklager 9 ausgeübte Kraft F_{K}. Der Verschiebeweg zwischen den Positionen des Gegenlagers B wird als Betriebsbereich U des Verschiebeweges X bezeichnet. Im Betrieb des Kraftfahrzeuges wird das Verlagerungselement 22 nur in diesem Bereich verschoben.

Aus dieser Figur 2 ist ersichtlich, dass der Hebel 19 mit zwei Vertiefungen 23 und 24 versehen ist. Der Aktor 7 ist nicht selbsthemmend. Wird durch den Spindelmotor 7a kein Drehmoment aufgebracht, befindet sich die Spindel 7b und damit das Verlagerungselement 22 in der Position, in der die Kupplung vollständig geöffnet ist.

Wird also durch den Spindelmotor 7a kein Drehmoment auf die Spindel 7b aufgebracht, beispielsweise bei Ausfall des Bordnetzes oder abgestelltem Fahrzeug, so strebt das Verlagerungselement 22 aufgrund der Geometrie des (Ausrück)Hebels 19 und des nicht selbsthemmend ausgebildeten Aktors 7 die geöffnete Stellung der Kupplung 2 an.

Die Figur 3 stellt einen Ausschnitt des Hebels 19 der Figur 2 dar. In dieser sind die auf das Verlagerungselement 22 wirkenden Kräfte ersichtlich. Das Verlagerungselement 22 wird hierbei vereinfacht durch die Rolle 21 repräsentiert. Die von der Feder 20 ausgeübte Federkraft F_{F} verhält sich zu der durch das Ausrücklager 9 auf den Hebel 19 ausgeübten (Kupplungs-) Kraft F_{K}wie die Verhältnisse der beiden Hebelarme a und b. Durch den als Wippkurve ausgebildeten Hebel 19 mit seinen beiden Vertiefungen 23 und 24, deren tiefste bzw. höchste Punkte die Referenzpunkte **I** und II definieren, bewirkt die an dem Gegenlager B gebildete schiefe Ebene, dass nicht nur eine in axialer Richtung der Achse 8 wirkende Gegenkraft auftritt, sondern zusätzlich eine in Richtung des äußeren Lagers A hin gerichtete Rückstellkraft F_{R}.

Wird das Verlagerungselement 22 bzw. die Rolle 21 durch die Spindel 7b des Aktors 7 in Richtung X1 verschoben, so erreicht diese die Vertiefung 23, bei der der Referenzpunkt **I** angebracht ist und hier eine stabile Lage einnimmt. Diese stabile Lage kann durch ein auf die Spindel 7b aufgebrachtes Drehmoment oder durch eine direkt auf die Rolle 21 einwirkende Kraft verlassen werden und so die Vertiefung 24 erreichen. Diese Vertiefung 24 weist den Referenzpunkt **II** auf. Die beiden Vertiefungen 23 und 24 sind zueinander beabstandet, so dass die beiden Referenzpunkte **I**, **II** ebenfalls einen Abstand aufweisen, der mit a gekennzeichnet ist. Dieser Abstand a wird von der auf den Hebel 19 wirkenden Gesamtkraft, dem Durchmesser der Rolle 21 und der Stärke des Stroms des Spindelmotors 7a, um beispielsweise von der Vertiefung 23 zur Vertiefung 24 zu gelangen, bestimmt. Der so erzielte "Sprung" der Rolle 21 an den Referenzpositionen **I** und **II** muss dabei ausreichen, dass bei allen Verschleißzuständen der Kupplung (die sich auch auf die Hebelwinkel auswirken) beide Referenzpunkte definiert bleiben. Dabei ist zu beachten, dass sowohl die Stromstärken des Motors als auch der Abstand a nicht so klein gewählt werden, dass die Reibung eine freie Bewegung des Verlagerungselements 22 bzw. der Rolle 21 verhindert.

Die Figur 4 zeigt die Referenzierung der Position der Rolle 21 des Aktors 7 bezüglich Figur 3 vor einem Start eines Fahrzeuges, wobei auf die Darstellung der Spindel 7b verzichtet wurde. Aus dieser Figur sind die Verhältnisse von der Größe des vom Spindelmotor 7a aufzubringenden Stromes **I** während des Zurücklegens einer Wegstrecke s der Rolle 21 ersichtlich, um von dessen Ausgangsstellung beispielsweise zum Referenzpunkt **I** zu gelangen. Dazu legt die Rolle 21 den Weg X1 zurück. Wenn sich die federbelastete Rolle 21 in die Vertiefung 23 hineinbewegt, sinkt zunächst bis zur Erreichung der tiefsten Stelle der Vertiefung 23 die der beweglichen Rolle 21 entgegengesetzte Kraft bzw. der entgegengesetzte Widerstand. In dieser Position, in der ein Kräftegleichgewicht herrscht, nimmt die Rolle 21 eine stabile Position ein. Zur exakten Plausibilisierung ist jedoch das Erreichen eines weiteren Referenzpunktes erforderlich, der durch die in der Vertiefung 24 definierte Referenzposition **II** charakterisiert wird. Dazu ist von der Rolle 21 eine weitere Wegstrecke s zurückzulegen, um den Abstand a zwischen den beiden Referenzpunkten **I** und **II** zu überwinden. Insgesamt ist also von der Rolle 21 der Weg X2 zurückzulegen. Damit die Rolle 21 den tiefsten Punkt der Vertiefung 24 überwinden kann, bedarf es einer kurzzeitigen Bestromung des Spindelmotors 7a nach dessen Stillstand. Dazu erhält dieser von der Steuerung ein Entlastungssignal, wodurch der Spindelmotor 7a mit einer kurzzeitigen Entlastungsspannung beaufschlagt wird. Durch diese Entlastungsspannung werden die Selbsthaltekräfte des Spindelmotors 7a oder der Rolle 21 zumindest teilweise überwunden, so dass eine entsprechende Bewegung der Rolle 21 in Richtung zweitem Referenzpunkt **II** erfolgen kann. Hat die Rolle 21 die Vertiefung 23 erreicht, nimmt sie in dieser Position wiederum eine stabile Lage ein, da hier ebenfalls die Kräfte im Gleichgewicht sind. Aus diesem Diagramm ist weiterhin ersichtlich, dass die oberhalb der Wegachse s aufzubringende Stromstärke I dazu erforderlich ist, um mit dieser eine Kraft in Richtung Schließen der Kupplung 2 zu erzielen und die unterhalb der Wegachse s dargestellte Größe der Stromstärke 1 dazu erforderlich ist um das Öffnen der Kupplung 2 zu bewirken.

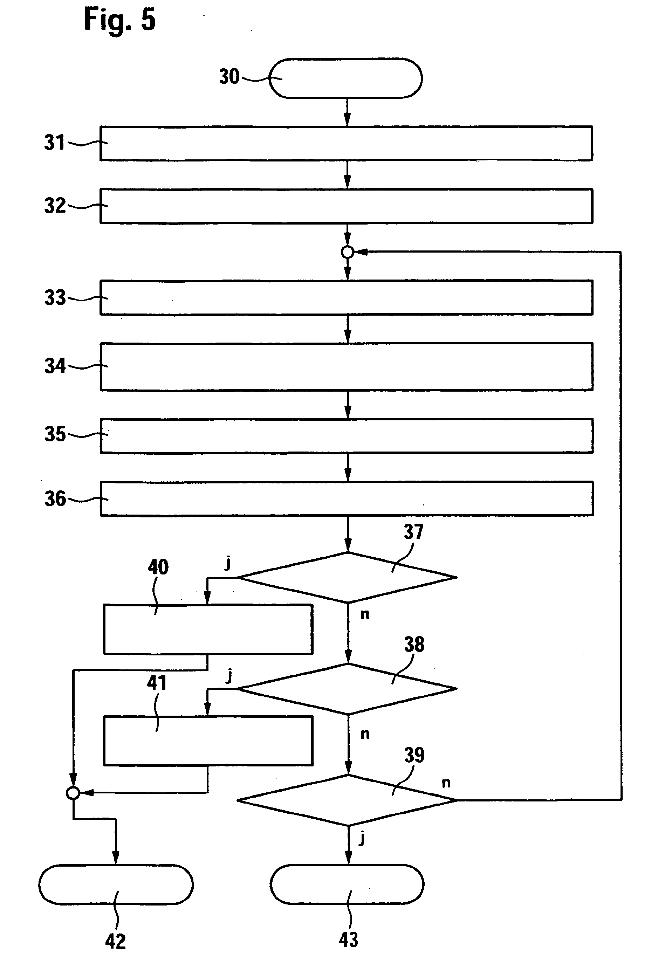

In der Figur 5 ist das erfindungsgemäße Verfahren gemäß Figur 4 in Form eines Flussdiagramms dargestellt.

Mit dem Schritt 30 wird das Verfahren gestartet. lm Schritt 31 wird die freie Bewegung des Spindelmotors 7a überprüft. Dabei befindet sich dieser in einer "DISABLE"-Stellung, d. h. er ist so beschaltet, dass kein Strom durch den Spindelmotor 7a fließen kann. Nach diesem Deaktivieren des Spindelmotors 7a befindet sich die Rolle 21, die bestrebt ist nach dem Stillstand des Spindelmotors 7a eine Gleichgewichtslage einzunehmen, entweder im Referenzpunkt I, dem Referenzpunkt **II** oder mit kleiner Wahrscheinlichkeit in einem Bereich dazwischen, wo ein Kräftegleichgewicht erreicht wird. Das bedeutet, dass diese Startposition in der Steuereinheit 6 hinterlegt wird.

Im Schritt 32 erfolgt in der Steuereinheit zur Zählung der erforderlichen "Anfahrvorgänge" an die Referenzpunkte **I** und **II** das Initialisieren einer Zählvariablen, die bei N = 0 beginnt. Im nachfolgenden Schritt 33 wird die aktuelle Position der Rolle 21 nach einem zurückgelegten Weg X1 gespeichert. Durch eine auf den Spindelmotor 7a kurzzeitig aufgebrachte Entlastungsspannung werden dessen Selbsthaltekräfte oder die Reibungskräfte der Rolle 21 zumindest teilweise überwunden, so dass eine entsprechende Bewegung der Rolle 21 erfolgen kann. Im Schritt 34 führt diese lagegeregelte Bewegung der Rolle 21 zur Position X = X1 + ΔX, wobei ein weiterer "Anfahrvorgang" erforderlich war und somit der Zähler den Stand N = N + 1 aufweist. Im nachfolgenden Schritt 35 wird wiederum der Spindelmotor 7a auf DISABLE geschaltet, so dass dieser nicht bestromt ist. Da die Spindel 7b jedoch nicht selbsthemmend ausgelegt ist, kann sich die auf dieser bewegbaren Rolle 21 solange frei bewegen, bis diese sich in einer Gleichgewichtsposition befindet. Nach diesem kurzen Warten nimmt die Rolle 21 eine weitere Position ein. Hatte die Rolle 21 mit ihrem zurückgelegten Weg X1 den Referenzpunkt **I** erreicht, rollt sie jetzt beispielsweise in den Referenzpunkt **II**. Es könnte auch der Fall gewesen sein, dass die Rolle 21 im Schritt 33 im Referenzpunkt **II** war und danach in den Referenzpunkt **I** gerollt ist. Eine weitere Möglichkeit wäre auch, dass sich die Rolle im Schritt 33 in einem Gleichgewichtszustand befand, der innerhalb des Abstandes a zwischen den beiden Referenzpunkten **I** und **II** liegt und nun, dann, anschließend hat sich die Rolle im Schritt 34 in den Referenzpunkt **II** oder **I** bewegt. Auf alle Fälle wird im Schritt 36 die aktuelle Position der Rolle 21 gespeichert. Im nächsten Schritt 37 werden in der Steuereinheit 6 die jeweils zurückgelegten Wege X1 und X2 miteinander verglichen und ausgewertet. Ergibt diese Auswertung, dass der von der Rolle 21 zurückgelegte Weg X2 kürzer ist als der Weg X1, so wird im Schritt 40 referenziert, dass sich die Istposition der Rolle 21 mit der Position im Referenzpunkt I deckt. Damit ist die Position der Rolle 21 erreicht und das Verfahren ist im Schritt 42 beendet. Ergibt die Auswertung allerdings, dass der von der Rolle 21 zurückgelegte Weg X2 länger ist als der Weg X1, so wird im Schritt 41 referenziert, dass sich die Istposition der Rolle 21 mit der Position im Referenzpunkt **II** deckt. Damit ist im Schritt 42 das Verfahren beendet.

Ergibt im Schritt 37 der Vergleich der beiden zurückgelegten Wegstrecken X1 und X2 in der Steuereinheit 6, dass der Weg X2 dem Weg X1 entspricht (Schritt 38), so folgt daraus, dass sich die Rolle 21 im Referenzpunkt II befinden muss (Schritt 41). Somit ist die Position der Rolle 21 definiert und das Verfahren ist abgeschlossen (Schritt 42).

Entspricht allerdings die zurückgelegte Wegstrecke X2 nicht dem Weg X1 (Schritt 38), und ist zur Erreichung eines Referenzpunktes ein weiterer "Anfahrvorgang" erforderlich, wobei der Zähler im Schritt 39 den Stand N = 2 ausweist, so liegt ein Fehler (Schritt 43) vor. Dieser kann beispielsweise durch einen Hardwarefehler verursacht worden sein, so dass ein weiterer Referenzpunkt nicht erkannt wurde. In diesem Falle wird von der Steuereinheit 6 dem Fahrer angezeigt, dass ein Fehler vorliegt, der behoben werden muss.

Steht jedoch der Zähler für die erforderlichen "Anfahrvorgänge" nicht auf 2, so beginnt das Verfahren mit dem Schritt 33 von vorn. Auf diese Weise kann nun durch ein erneutes gezieltes Anfahren des jeweils anderen Referenzpunktes eine Referenzierung überprüft werden. Wenn die Rolle 21 nach einer Deaktivierung des Spindelmotors 7a und einer erfolgreichen Bewegung stehen bleibt (nicht durch einen Anschlag oder Blockieren), ist die Referenzierung bestätigt und damit das Verfahren beendet.

### Bezugszeichenliste

- 1: Antriebseinheit
- 2: Drehmomentübertragungssystem/ Kupplung
- 2a: Schwungrad
- 2b: Anlasserkranz
- 2c: Kupplungsscheibe mit Reibbelägen
- 2d: Druckplatte
- 2f: Tellerfeder
- 2e: Gegendruckplatte
- 3: Getriebe
- 6: Steuereinheit
- 7: Aktor / Spindelaktor
- 7a: Spindelmotor
- 7b: Spindel
- 8: Achsen
- 9: Ausrücklager
- 10: Verbindung
- 11: Signalverbindung
- 12: Signalverbindung
- 13: Signalverbindung
- 14: Signalverbindung
- 15: Bremsenbetätigungselement
- 16: Sensor
- 17: Gaspedal / Lasthebel
- 18: Sensor
- 19: Hebel / Wippkurve
- 20: Feder
- 21: Rolle
- 21 a: Stützrolle
- 22: Verlagerungselement
- 23: Vertiefung
- 24: Vertiefung
- 25: Abstützung

- 30: Start

- 1 -41: Verfahrensschritte
- 42: Ende
- 43: Fehler

- **I**: Referenzpunkt
- **II**: Referenzpunkt

- A: äußere Lagerstelle
- B: Drehpunkt / Gegenlager
- C: Innenlager
- U: Betriebsbereich
- F_{F}: Federkraft
- F_{R}: Rollenkraft
- F_{K}: Kupplungskraft
- a: Abstand der Referenzpunkte
- x₁: Wegstrecke für Rolle bis zur Erreichung Referenzpunkt **I**
- x₂: Wegstrecke für Rolle bis zur Erreichung Referenzpunkt **II**
- I: Strom des Spindelmotors

## Patentansprüche

1. Verfahren zur Plausibilisierung einer definierten Position eines Verlagerungselements (22), das auf einer Spindel (7b) gelagert und mit dieser in Wirkverbindung steht und mittels eines Spindelmotors (7a) verlagerbar ist, der mit einer Steuereinheit (6) in Verbindung steht, **dadurch gekennzeichnet, dass** eine erste Referenzposition (**I**) und eine zweite Referenzposition (**II**) definiert werden, und dass Verlagerungselement (22) in eine definierte Position verlagert wird, die der ersten Referenzposition (**I**), der zweiten Referenzposition (**II**) oder einer Position zwischen diesen beiden Referenzpositionen (**I**, **II**) entspricht, und dass durch eine Verlagerung des Verlagerungselements (22) überprüft wird, wie groß der Abstand der definierten Position des Verlagerungselements (22) zu einer der beiden Referenzpositionen (**I**) oder (**II**) ist.

2. Verfahren nach Anspruch 1, **dadurch gekennzeichnet, dass** der Spindelmotor (7a) zu Beginn des Verfahrens deaktiviert ist.

3. Verfahren nach Anspruch 1, **dadurch gekennzeichnet, dass** der Spindelmotor (7a) nach Erreichen einer Gleichgewichtsposition des Verlagerungselements (22), die nicht einer Referenzposition (**I**) oder (**II**) entspricht, kurzzeitig bestromt wird.

4. Verfahren nach Anspruch 3, **dadurch gekennzeichnet, dass** der Spindelmotor (7a) nach einer kurzzeitigen Bestromung wieder deaktiviert wird.

5. Vorrichtung zur Plausibilisierung der Position eines auf einer Spindel axial verlagerbaren Verlagerungselements (22), wobei die Spindel (7b) von einem Spindelmotor (7a) angetrieben wird, sich das Verlagerungselement (22) auf einem als Wippkurve ausgebildeten Hebel (19) bewegt und sich an diesem abstützt und dieser Hebel (19) eine Vertiefung (23) aufweist, **dadurch gekennzeichnet, dass** in einem Abstand zur Vertiefung (23) eine weitere Vertiefung (24) auf dem Hebel (19) vorgesehen ist.

6. Vorrichtung nach Anspruch 5, **dadurch gekennzeichnet, dass** die Vertiefungen (23, 24) an ihrer tiefsten Stelle jeweils einen Referenzpunkt (**I**) und (**II**) definieren.

7. Vorrichtung nach Anspruch 5 und 6, **dadurch gekennzeichnet, dass** der Abstand des am weitesten vom Kupplungsbetätigungspunkt entfernte Referenzpunkt (**I**) oder (**II**) größer ist als der Abstand zwischen beiden Referenzpunkten (**I**) und (**II**).

8. Vorrichtung nach Anspruch 5, **dadurch gekennzeichnet, dass** das Verlagerungselement (22) mindestens durch eine Rolle (21) verkörpert wird.

9. Vorrichtung nach Anspruch 5 und 6, **dadurch gekennzeichnet, dass** die Wahl des Abstands zwischen den Referenzpunkten (**I**) und (**II**) abhängig ist von der auf den Hebel (19) wirkenden Gesamtkraft, dem Durchmesser der Rolle (21) und dem der Gesamtkraft entgegenwirkenden erforderlichen Strom des Spindelmotors (7a).

10. Vorrichtung nach Anspruch 5, **dadurch gekennzeichnet, dass** die Spindel (7b) auch durch die Rolle (21) drehbeweglich ist.

## Claims

1. Method for checking the plausibility of a defined position of a displacement element (22) which is mounted on a spindle (7b) and is operatively connected to the said spindle and can be displaced by means of a spindle motor (7a) which is connected to a control unit (6), **characterized in that** a first reference position (I) and a second reference position (II) are defined, and **in that** the displacement element (22) is displaced into a defined position which corresponds to the first reference position (I), to the second reference position (II) or to a position between these two reference positions (I, II), and **in that**, by virtue of a displacement of the displacement element (22), the magnitude of the distance of the defined position of the displacement element (22) from one of the two reference positions (I) or (II) is checked.

2. Method according to Claim 1, **characterized in that** the spindle motor (7a) is deactivated at the beginning of the method.

3. Method according to Claim 1, **characterized in that** the spindle motor (7a) is briefly supplied with power after an equilibrium position of the displacement element (22) is reached, this equilibrium position not corresponding to a reference position (I) or (II).

4. Method according to Claim 3, **characterized in that** the spindle motor (7a) is deactivated again after being briefly supplied with power.

5. Apparatus for checking the plausibility of the position of a displacement element (22) which is axially displaceable on a spindle, with the spindle (7b) being driven by a spindle motor (7a), the displacement element (22) moving on a lever (19) which is in the form of a rocker cam and being supported on the said lever, and this lever (19) having a recess (23), **characterized in that** a further recess (24) is provided on the lever (19) at a distance from the recess (23).

6. Apparatus according to Claim 5, **characterized in that** the recesses (23, 24) in each case define a reference point (I) and (II) at their deepest point.

7. Apparatus according to Claims 5 and 6, **characterized in that** the distance of the reference point (I) or (II) which is the furthest away from the clutch operating point is greater than the distance between the two reference points (I) and (II).

8. Apparatus according to Claim 5, **characterized in that** the displacement element (22) is embodied at least by a roller (21).

9. Apparatus according to Claims 5 and 6, **characterized in that** the choice of the distance between the reference points (I) and (II) is dependent on the total force acting on the lever (19), the diameter of the roller (21) and the required current of the spindle motor (7a), which current counteracts the total force.

10. Apparatus according to Claim 5, **characterized in that** the spindle (7b) can also be rotated by the roller (21).

## Revendications

1. Procédé de calcul de plausibilité d'une position définie d'un élément déplaçable (22), qui est monté sur une broche (7b) et qui est en liaison fonctionnelle avec celle-ci et peut être déplacé au moyen d'un moteur de broche (7a), qui est en liaison avec une unité de commande (6), **caractérisé en ce qu'**une première position de référence (I) et une deuxième position de référence (II) sont définies, et **en ce que** l'élément déplaçable (22) est déplacé dans une position définie qui correspond à la première position de référence (I), à la deuxième position de référence (II), ou à une position entre ces deux positions de référence (I, II), et **en ce que** par un déplacement de l'élément déplaçable (22), on vérifie la mesure de la distance de la position définie de l'élément déplaçable (22) par rapport à l'une des deux positions de référence (I, II).

2. Procédé selon la revendication 1, **caractérisé en ce que** le moteur de broche (7a) est désactivé au début du procédé.

3. Procédé selon la revendication 1, **caractérisé en ce que** le moteur de broche (7a) est brièvement alimenté en courant après l'obtention d'une position d'équilibrage de l'élément déplaçable (22), laquelle ne correspond pas à une position de référence (I) ou (II).

4. Procédé selon la revendication 3, **caractérisé en ce que** le moteur de broche (7a) est à nouveau désactivé après une brève alimentation en courant.

5. Dispositif de calcul de plausibilité de la position d'un élément déplaçable (22) déplaçable axialement sur une broche, la broche (7b) étant entraînée par un moteur de broche (7a), l'élément déplaçable (22) se déplaçant sur un levier (19) réalisé sous forme de came basculante et s'appuyant sur celui-ci, et ce levier (19) présentant un renfoncement (23), **caractérisé en ce qu'**un autre renfoncement (24) est prévu sur le levier (19) à une certaine distance du renfoncement (23).

6. Dispositif selon la revendication 5, **caractérisé en ce que** les renfoncements (23, 24) définissent, en leurs emplacements les plus profonds, à chaque fois un point de référence (I) et (II).

7. Dispositif selon les revendications 5 et 6, **caractérisé en ce que** la distance du point de référence (I) ou (II) le plus éloigné du point d'actionnement d'accouplement est supérieure à la distance entre les deux points de référence (I) et (II).

8. Dispositif selon la revendication 5, **caractérisé en ce que** l'élément déplaçable (22) est constitué au moins par un rouleau (21).

9. Dispositif selon les revendications 5 et 6, **caractérisé en ce que** le choix de la distance entre les points de référence (I) et (II) dépend de la force totale agissant sur le levier (19), du diamètre du rouleau (21) et du courant dans le moteur de broche (7a) nécessaire pour s'opposer à la force totale.

10. Dispositif selon la revendication 5, **caractérisé en ce que** la broche (7b) est également déplaçable en rotation par le rouleau (21).
